# FASCICULE DE BREVET EUROPEEN

(11) **EP 0 788 912 B1**
(45) Date de publication et mention de la délivrance du brevet: **24.10.2001**
(21) Numéro de dépôt: 97400131.5
(22) Date de dépôt: 21.01.1997
(51) Int. Cl.: B60J 5/04

(54) **Dispositif formant renfort de porte de véhicule automobile**
Türverstärkungsvorrichtung für Kraftfahrzeug
Reinforcement device for door of motor vehicle

(30) Priorité: 06.02.1996 FR 9601423
(43) Date de publication de la demande: 13.08.1997
(73) Titulaire: AUTOMOBILES PEUGEOT, 75116 Paris (FR); AUTOMOBILES CITROEN, 92200 Neuilly-sur-Seine (FR)
(72) Inventeur: Villadier, Bernard, 91370 Verrieres Le Buisson (FR)
(74) Mandataire: Thinat, Michel

(56) Documents cités:
- EP-A- 0 236 291
- DE-A- 4 342 038
- DE-A- 4 412 935
- DE-A- 19 519 509
- GB-A- 2 101 535
- US-A- 4 861 097
- US-A- 5 466 031

## Description

La présente invention concerne un dispositif formant renfort de porte de véhicule automobile.

Un tel dispositif a pour but d'éviter la déformation de l'encadrement d'une porte avant du véhicule en cas de collision frontale du véhicule.

DE-A-43 42 038 décrit un dispositif formant renfort de porte de véhicule automobile comprenant les caractéristiques du préambule de la revendication 1.

Selon ce document antérieur, la poutre anti-collision est en appui, à l'avant, sur des charnières et, à l'arrière, sur le pêne de serrure.

Une telle solution connue n'assure pas une résistance mécanique optimale lors d'une collision frontale du véhicule.

L'invention a pour but d'éliminer l'inconvénient ci-dessus en proposant un dispositif formant renfort de porte de véhicule automobile permettant d'éviter la déformation de l'encadrement de la porte en cas de collision frontale, comprenant une poutre réalisée en un matériau résistant à la compression et située à l'intérieur de la porte entre le panneau intérieur et la vitre en position basse ouverte, et qui est caractérisé en ce que la poutre prend appui à son extrémité avant, sur la zone de la charnière supérieure de la porte et qu'elle prend appui, à son extrémité arrière, sur la partie basse de la porte.

De préférence, la poutre est métallique.

Selon une variante de réalisation, la poutre est constituée par un profilé.

Selon une autre variante de réalisation, la poutre est un corps creux réalisé à partir d'une tôle emboutie.

La partie basse de la porte sur laquelle prend appui la poutre précitée correspond à la base du pied milieu du véhicule.

Dans le cas où le véhicule comprend deux portes latérales respectivement avant et arrière, le dispositif est caractérisé en ce que la poutre précitée est celle de la porte avant et en ce que la poutre de la porte arrière prend appui, à son extrémité avant, sur la partie basse de la porte arrière et, à son extrémité arrière, sur la partie correspondant approximativement à la serrure de la porte arrière, de façon que la poutre de la porte arrière et la poutre de la porte avant soient symétriques par rapport au pied milieu.

Chaque poutre précitée est fixée à ses extrémités par soudage, emboîtement, vissage, collage, rivetage ou tout autre moyen.

La poutre est fixée en plusieurs points sur le panneau intérieur de la porte.

Les parties d'appui précitées de chaque poutre sont renforcées.

La porte précitée comprend également une barre anti-intrusion située entre la vitre et le panneau extérieur de cette porte.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention, et dans lesquels :

La figure 1 est une vue de côté intérieure d'une porte renforcée conformément à l'invention.

La figure 2 est une vue en section suivant la ligne II-II de la figure 1.

La figure 3 est une vue en section suivant la ligne III-III de la figure 1.

La figure 4 est une vue en section suivant la ligne IV-IV de la figure 1.

La figure 5 est une vue agrandie de la partie cerclée en V de la figure 3 et représentant une variante de réalisation de la poutre de renfort de l'invention.

Les figures 6 à 8 représentent différents modes de réalisation du dispositif formant renfort de l'invention.

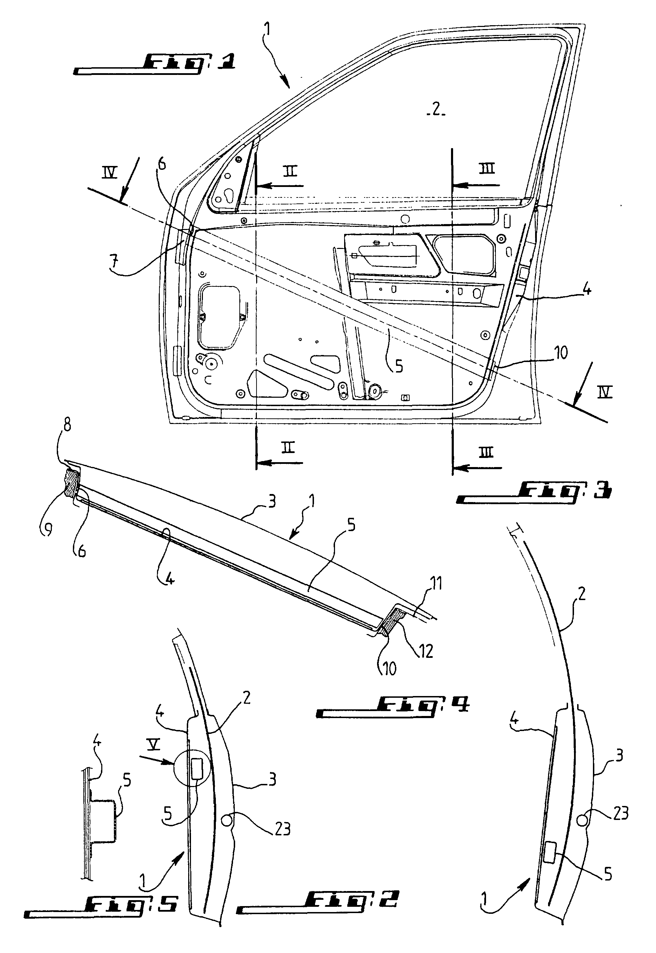

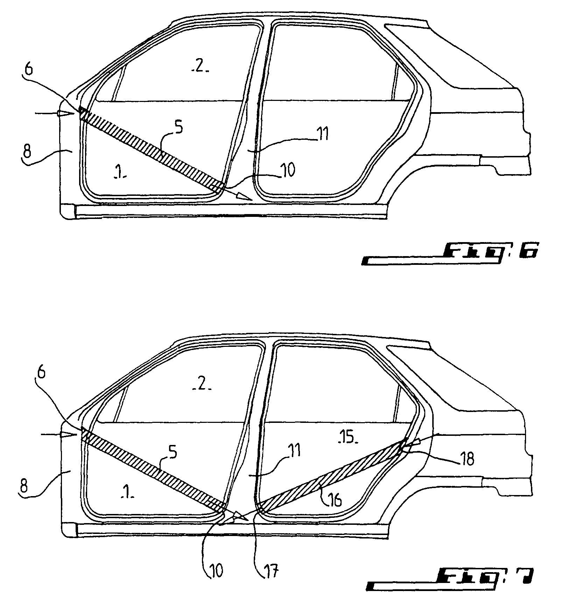

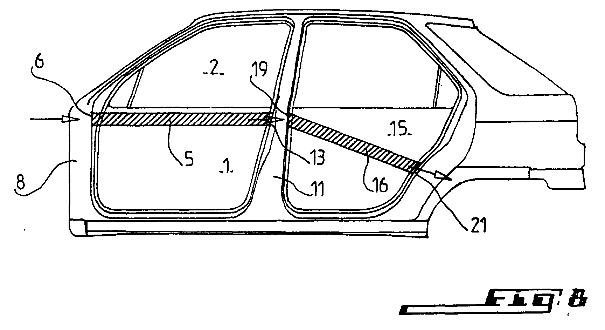

En se reportant tout d'abord aux figures 1 à 4, la référence 1 désigne une porte avant d'un véhicule automobile lorsque vue de l'intérieur du véhicule et qui comprend une vitre 2 pouvant coulisser entre une position de fermeture (figure 2) et une position d'ouverture partielle (figure 3) dans l'espace défini entre le panneau extérieur 3 et le panneau intérieur ou doublure 4 de la porte 1.

Selon l'invention, la porte 1 comprend une poutre de renfort 5 réalisée en un matériau résistant à la compression et située à l'intérieur de la porte 1 entre le panneau intérieur 4 et la vitre 2 en considérant cette dernière en position basse ouverte. La poutre 5 permet, en cas de collision frontale, de maintenir l'encadrement de la porte 1.

De préférence, la poutre 5 est métallique et peut être soit un profilé, par exemple rectangulaire, comme représenté notamment aux figures 1 à 3, soit réalisée à partir d'une tôle emboutie pour former avec le panneau intérieur 4 de porte 1 un corps creux à section transversale en forme de U à fond plat comme représenté en figure 5.

De plus, la poutre 5 peut être fixée en plusieurs points sur le panneau intérieur 4 de la porte 1 et/ou par soudage de ses extrémités à des parties d'appui de la porte 1 qui seront définies ci-dessous dans les divers modes de réalisation de montage de la poutre.

Les différents modes de réalisation de l'invention qui vont être décrits ont pour particularité commune que la poutre 5 d'une porte avant 1 du véhicule prend appui, à son extrémité avant, sur la zone 6 de la charnière supérieure existant 7 du pied avant 8 de la porte 1, cette zone d'appui étant renforcée par une pièce de renfort 9 ménagée à l'intérieur de la partie correspondante du pied avant 8.

Selon les modes de réalisation représentés aux figures 1, 6 et 7, la poutre 5 prend appui, à son extrémité arrière, sur la partie basse 10 de la porte 1 correspondant à la base du pied milieu 11 du véhicule. De préférence, une pièce de renfort 12 (figure 4) est aménagée à l'intérieur du pied milieu 11 pour renforcer la zone d'appui de l'extrémité arrière de la poutre 5.

Selon le mode de réalisation représenté en figure 8, la poutre 5 prend appui, à son extrémité arrière, sur une partie de milieu 13 de la porte 1 correspondant approximativement à la mi-hauteur du pied milieu 11 du véhicule, de façon que la poutre 5 soit sensiblement horizontale.

Les figures 7 et 8 montrent qu'une porte arrière 15 du véhicule peut également comporter une poutre 16 en un matériau résistant à la compression comme la poutre 5 de la porte avant 1 et permettant de maintenir l'encadrement de la porte arrière 1 en cas de choc arrière longitudinal.

Selon le mode de réalisation représenté en figure 7, la poutre 16 prend appui, à son extrémité avant, sur la partie basse 17 de la porte arrière 15 correspondant à la base du pied milieu 11 et, à son extrémité arrière, sur la partie 18 de la porte 15 correspondant approximativement à l'emplacement de la serrure de cette porte, de façon que la poutre 16 de la porte arrière 15 et la poutre 5 de la porte avant 1 soient sensiblement symétriques par rapport au pied milieu 11 du véhicule.

Selon le mode de réalisation représenté en figure 8, la poutre 16 prend appui, à son extrémité avant, de la même manière que la poutre 16 de la figure 8 et prend appui, à son extrémité arrière, sur la partie inférieure arrière 21 de la porte 15 correspondant au passage de roue arrière de façon que la poutre 16 de la porte arrière 15 soit en biais relativement à la poutre 5 de la porte avant 1.

Les figures 2 et 3 montrent que la porte avant 1 comporte également une barre anti-intrusion 23 qui est située entre la vitre 2 et le panneau extérieur 3 de cette porte.

Comme cela ressort des différents modes de réalisation ci-dessus décrits, les poutres respectivement des portes avant et arrière sont situées sensiblement dans un même plan vertical parallèle à l'axe longitudinal du véhicule avec leurs extrémités respectives arrière et avant situées à un même niveau de façon que la transmission de l'effort de la poutre avant 5 sur le pied milieu 11 s'effectue à la même hauteur que celle de la poutre arrière 16.

Le dispositif de renfort de porte de véhicule automobile conforme à l'invention permet d'éviter la déformation du pavillon ou de l'encadrement de porte en cas de choc violent, ce qui contribue à conserver l'espace de survie que forme l'habitacle du véhicule. De plus, le fait de conserver la forme de l'habitacle permet d'ouvrir la porte après la collision.

## Revendications

1. Dispositif formant renfort de porte de véhicule automobile permettant d'éviter la déformation de l'encadrement de la porte en cas de collision frontale, comprenant une poutre (5 ; 16) réalisée en un matériau résistant à la compression et située à l'intérieur de la porte (1; 15) entre le panneau intérieur (4) et la vitre (2) en position basse ouverte, **caractérisé en ce que** la poutre (5) prend appui à son extrémité avant, sur la zone (6) de la charnière supérieure (7) de la porte (1) et qu'elle prend appui, à son extrémité arrière, sur la partie basse (10) de la porte.

2. Dispositif selon la revendication 1, **caractérisé en ce que** la poutre (5 ; 16) est métallique.

3. Dispositif selon la revendication 2, **caractérisé en ce que** la poutre (5 ; 16) est un profilé.

4. Dispositif selon la revendication 2, **caractérisé en ce que** la poutre (5 ; 16) est un corps creux réalisé à partir d'une tôle emboutie.

5. Dispositif selon l'une des revendications précédentes, **caractérisé en ce que** la partie basse (10) de la porte (1) sur laquelle prend appui la poutre précitée correspond à la base du pied milieu (11) du véhicule.

6. Dispositif selon la revendication 5, où le véhicule comprend deux portes latérales respectivement avant (1) et arrière (15), **caractérisé en ce que** la poutre (5) précitée est celle de la porte avant (1) et **en ce que** la poutre (16) de la porte arrière (15) prend appui, à son extrémité avant, sur la partie basse (17) de la porte arrière (15) et, à son extrémité arrière, sur la partie (18) correspondant approximativement à la serrure de la porte arrière (15), de façon que la poutre (16) de la porte arrière (15) et la poutre (5) de la porte avant (1) soient symétriques par rapport au pied milieu (11).

7. Dispositif selon l'une des revendications précédentes, **caractérisé en ce que** chaque poutre (5 ; 16) précitée est fixée à ses extrémités par soudage, emboîtement, vissage, collage, rivetage ou tout autre moyen.

8. Dispositif selon l'une des revendications précédentes, **caractérisé en ce que** la poutre (5 ; 16) est fixée en plusieurs points sur le panneau intérieur (4) de la porte (1 15).

9. Dispositif selon l'une des revendications précédentes, **caractérisé en ce que** les parties d'appui précitées de chaque poutre (5 ; 16) sont renforcées.

10. Dispositif selon l'une des revendications précédentes, **caractérisé en ce que** la porte précitée comprend également une barre anti-intrusion (23) située entre la vitre (2) et le panneau extérieur (3) de cette porte.

## Patentansprüche

1. Türverstärkungsvorrichtung für Kraftfahrzeug, die es erlaubt, die Verformung des Türrahmens bei einem frontalen Aufprall zu vermeiden, umfassend eine Strebe (5; 16), die aus einem kompressionsresistenten Material realisiert ist und sich im Innern der Tür (1; 15) zwischen dem Innenpaneel (4) und der Scheibe (2) in geöffneter niedriger Position befindet, **dadurch gekennzeichnet, daß** die Strebe (5) sich auf ihrem vorderen äußeren Ende auf der Zone (6) des oberen Scharniers (7) der Tür (1) aufstützt und daß sie sich an ihrem hinteren äußeren Ende auf dem unteren Teil (10) der Tür aufstützt.

2. Vorrichtung gemäß Anspruch 1, **dadurch gekennzeichnet, daß** die Strebe (5; 16) metallisch ist.

3. Vorrichtung gemäß Anspruch 2, **dadurch gekennzeichnet, daß** die Strebe (5; 16) ein Profil ist.

4. Vorrichtung gemäß Anspruch 2, **dadurch gekennzeichnet, daß** die Strebe (5; 16) ein aus einem Stulpblech realisierter Hohlkörper ist.

5. Vorrichtung gemäß einem der vorgenannten Ansprüche, **dadurch gekennzeichnet, daß** der untere Teil (10) der Tür (1), auf dem die vorgenannte Strebe sich abstützt, der Basis der B-Säule (11) des Fahrzeugs entspricht.

6. Vorrichtung gemäß Anspruch 5, bei der das ahrzeug zwei Seitentüren umfaßt, jeweils vorne (1) und hinten (15), **dadurch gekennzeichnet, daß** die vorgenannte Strebe (5) die der Vordertür (1) ist und daß die Strebe (16) der Hintertür (15) sich an seinem vorderen äußeren Ende auf dem unteren Teil (17) der Hintertür (15) aufstützt und an ihrem hinteren äußeren Ende auf dem Teil (18), der ungefähr dem Schloß der Hintertür (15) entspricht, derart, daß die Strebe (16) der Hintertür (15) und die Strebe (5) der Vordertür (1) im Verhältnis zur B-Säule (11) symmetrisch sind.

7. Vorrichtung gemäß einem der vorgenannten Ansprüche, **dadurch gekennzeichnet, daß** jede vorgenannte Strebe (5; 16) an ihren äußeren Enden durch Verschweißen, Einfügung, Verschrauben, Verkleben, Vernieten oder jedes andere Mittel befestigt ist.

8. Vorrichtung gemäß einem der vorgenannten Ansprüche, **dadurch gekennzeichnet, daß** die Strebe (5; 16) an mehreren Punkten auf dem Innenpaneel (4) der Tür (1; 15) befestigt ist.

9. Vorrichtung gemäß einem der vorgenannten Ansprüche, **dadurch gekennzeichnet, daß** die vorgenannten Stützteile jeder Strebe (5; 16) verstärkt sind.

10. Vorrichtung gemäß einem der vorgenannten Ansprüche, **dadurch gekennzeichnet, daß** die vorgenannte Tür ebenfalls eine Anti-Intrusionsstange (23) umfaßt, die sich zwischen der Scheibe (2) und dem Innenpaneel (3) dieser Tür befindet.

## Claims

1. Reinforcement device for door of motor vehicle enabling to avoid distortion of the door frame in case of frontal collision, comprising a beam (5 ; 16) made of a compression resisting material and located inside the door (1 ; 15) between an inner panel (4) and the window pane (2) in an open low position, **characterized in that** the beam (5) is supported at its front end on the area (6) of the upper hinge (7) of the door (1) and is supported, at its rear end, on the lower part (10) of the door.

2. Device according to claim 1, **characterized in that** the beam (5 ; 16) is a metal beam.

3. Device according to claim 2, **characterized in that** the beam (5 ; 16) is a profiled beam.

4. Device according to claim 2, **characterized in that** the beam (5 ; 16) is a hollow body made from a stamped iron sheet.

5. Device according to one of the preceding claims, **characterized in that** the lower part (10) of the door (1) on which the prementioned beam is supported corresponds to the bottom of the middle foot (11) of the vehicle.

6. Device according to claim 5, wherein the vehicle comprises two side doors, front (1) and rear (15), respectively, **characterized in that** the prementioned beam (5) is that of the front door (1), wherein the beam (16) of the rear door (15) is supported, at its front end, on the lower part (17) of the rear door (15) and, at its rear end, on the part (18) which substantially corresponds to the lock of the rear door (15), so that the beam (16) of the rear door (15) and the beam (5) of the front door (1) are symmetrical with respect to the middle foot (11).

7. Device according to one of the preceding claims, **characterized in that** each prementioned beam (5 ; 16) is fixed, at its ends, by soldering, encasing, screwing, gluing, riveting or any other means.

8. Device according to one of the preceding claims, **characterized in that** the beam (5 ; 16) is fixed at various points to the inner panel (4) of the door (1; 15).

9. Device according to one of the preceding claims, **characterized in that** the prementioned supporting parts of each beam (5 ; 16) are reinforced.

10. Device according to one of the preceding claims, **characterized in that** the prementioned door comprises also an anti-intrusion bar (23) located between the window pane (2) and the outer panel (3) of this door.
